# EUROPEAN PATENT APPLICATION

(11) **EP 1 130 885 A2**
(43) Date of publication of application: **05.09.2001**
(21) Application number: 01104809.7
(22) Date of filing: 27.02.2001
(51) Int. Cl.: H04M 1/247, H04M 1/2745

(54) **Method for changing scroll mode in portable telephone and portable telephone using said method**

(30) Priority: 29.02.2000 JP 2000054920
(71) Applicant: Matsushita Electric Industrial Co., Ltd., Kadoma-shi, Osaka (JP)
(72) Inventor: Ishigaki, Junji, Hachioji-shi, Tokyo 192-0032 (JP)
(74) Representative: Grünecker, Kinkeldey, Stockmair & Schwanhäusser Anwaltssozietät

(57) **Abstract**

A screen in an operation mode is displayed on a display section (Step 51). Next, when a portion which is not displayed on a current screen is to be displayed through scrolling, it is decided whether a warp key (browser function key) is pushed down or not (Step 52) . If the warp key (browser function key) is pushed down, a scroll mode is changed (Step 53) . If the warp key (browser function key) is not pushed down, a current scroll mode is maintained (Step 54). Examples of the scroll mode to be changed include a line unit and a page unit.

## Description

### BACKGROUND OF THE INVENTION

The present invention relates to a scroll mode changing method in a portable telephone having a non-voice information communicating mode (for example, information mode so called i-mode) function, and more particularly to a method capable of changing a current scroll mode through a scroll mode changing operation. The non-voice information communicating mode implies an operation mode of an online data service using a digital portable telephone and can utilize a site (contents) connecting service registered on a center, an internet connecting service, a message service and an i-mode mail (e-mail).

Conventionally, in the case in which an upward or downward scroll key is operated to read a portion which is not displayed on a current screen in a portable telephone having a non-voice information communicating mode (for example, i-mode) function, only one scroll mode (scroll line by line) can be utilized.

In the portable telephone having a non-voice information communicating mode (for example, i-mode) function, however, in the case in which a mail is to be read, for example, the scroll line by line causes a scroll operation to be often carried out when reading a long mail. Therefore, there has been a problem in that the portable telephone is inconvenient for reading a long mail.

### SUMMARY OF THE INVENTION

The invention has been made to solve such a problem and has an object to provide a scroll mode changing method in a portable telephone which can change a current scroll mode through a scroll mode changing operation and a portable telephone using the scroll changing method.

A first aspect of the invention is directed to a scroll mode changing method in a portable telephone capable of carrying out non-voice information communication, wherein when a screen in an operation mode is displayed on a display section of the portable telephone and the screen is to be scrolled to display a scroll screen, a current scroll mode can be changed through a user's scroll mode changing operation. By such a structure, the user can properly change the scroll mode.

A second aspect of the invention is directed to the scroll mode changing method in a portable telephone according to the first aspect of the invention, wherein the scroll mode changing operation can be carried out through an operation of a browser function key. By such a structure, the user can properly change the scroll mode through a simple key operation.

A third aspect of the invention is directed to the scroll mode changing method in a portable telephone according to the first or second aspect of the invention, wherein the scroll mode includes a line scroll mode and a page scroll. By such a structure, a scroll mode can be properly changed between a line unit and a page unit.

A fourth aspect of the invention is directed to a portable telephone capable of changing a scroll mode by using the scroll mode changing method according to the first or second aspect of the invention. By such a structure, it is possible to provide a portable telephone capable of properly changing a scroll mode .

### BRIEF DESCRIPTION OF THE DRAWINGS

Fig. 1 is a front view showing the structure of a portable telephone according to an embodiment of the invention;
Fig. 2 is a diagram showing a circuit block for implementing the portable telephone illustrated in Fig. 1;
Fig. 3 is a diagram showing an example of an icon screen to be displayed during waiting in a display device of the portable telephone illustrated in Fig. 1;
Fig. 4 is a diagram showing an example of a transition of a display screen of the portable telephone for explaining the embodiment of the invention; and
Fig. 5 is a flow chart for explaining an operation for changing a scroll mode.

### DETAILED DESCRIPTION OF THE PREFERRED EMBODIMENTS

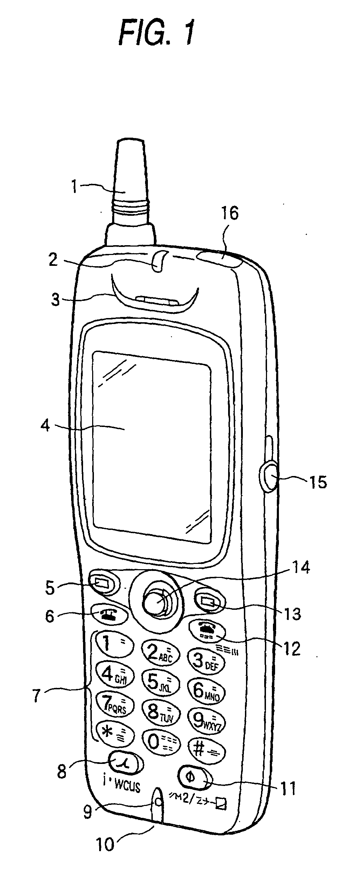

An embodiment of the invention will be described below with reference to Figs. 1 to 5.

Fig. 1 is a schematic diagram showing the structure of a portable telephone having a non-voice information communicating mode (for example, i-mode) function according to the embodiment of the invention. In Fig. 1, the portable telephone according to the embodiment of the invention comprises an antenna 1, an incoming /charging lamp 2, a receiver 3, a liquid crystal display 4, a left soft key 5 also serving as a telephone book button, a calling start button 6, a ten key or a dial key 7, a warp key 8 for switching to a non-voice information communicating operation mode, a transmitter 9, an external connecting terminal 10, a voice / manner key 11, a power / end / response holding key 12, a right soft key 13 also serving as a redial / clear button, a navigation key 14 also serving as a scroll function to select display in each of vertical and transverse directions and serving to carrying out selection and determination by pushing a central button, an earphone microphone terminal 15, and an infrared port 16.

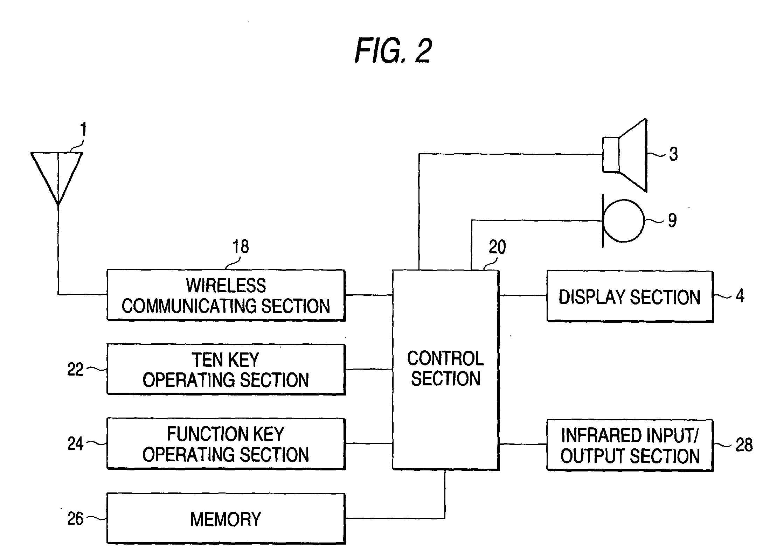

Fig. 2 shows a circuit block for implementing a portable telephone having the above-mentioned structure. The portable telephone shown in Fig. 2 receives radio waves by a receiving section (not shown) of a wireless communicating section 18 through the antenna 1 and transmits the received information to a control section 20. The control section 20 displays the received information such as a received telephone number on the display section 4 such as a liquid crystal display. Moreover, the control section 20 converts the received information into voice information and outputs a voice through the speaker (receiver) 3 in a receiving section. Furthermore, the transmitter (microphone) 9 receives a user's voice and transmits the voice to the control section 20 and carries out wireless transmission to a calling party through a transmitting section (not shown) of the wireless communicating section 18 and the antenna 1.

The control section 20 stores, in a memory 26, voice information such as the contents of calling during the calling or reads the stored information. A ten key operating section 22 serves to input a dial signal to the control section 20 through the operation of the ten key 7, and a function key operating section 24 other than the ten key serves to input the operation of the operated function key, for example, the navigation key 14 to the control section 20 . Moreover, an infrared input/output section 28 serves to exchange an infrared signal through the infrared port 16.

Moreover, the memory 26 serves to store a received mail, for example. The control section 20 serves to scroll and display the screen when the navigation key 14 of the function key operating section 24 is manipulated with the screen in an operation mode during an operation displayed on the display section 4. Furthermore, a scroll mode can be changed, for example, a scroll line by line is changed into a scroll page by page through a scroll mode changing operation by a user. These circuit blocks are accommodated in a housing shown in Fig. 1.

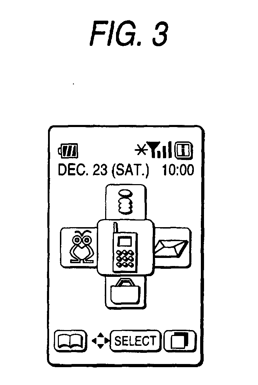

Fig. 3 shows an example of an icon screen to be displayed during waiting in a display section of a portable telephone having the above-mentioned structure. In this example, an icon screen is displayed in a cross shape. From the top, an i-mode main icon, an i-mode mail icon, a telephone book icon and a screen icon are displayed clockwise respectively, and a menu icon is displayed on the center. A selected icon screen is enlarged and displayed so that the icon screen which is being selected is apparent.

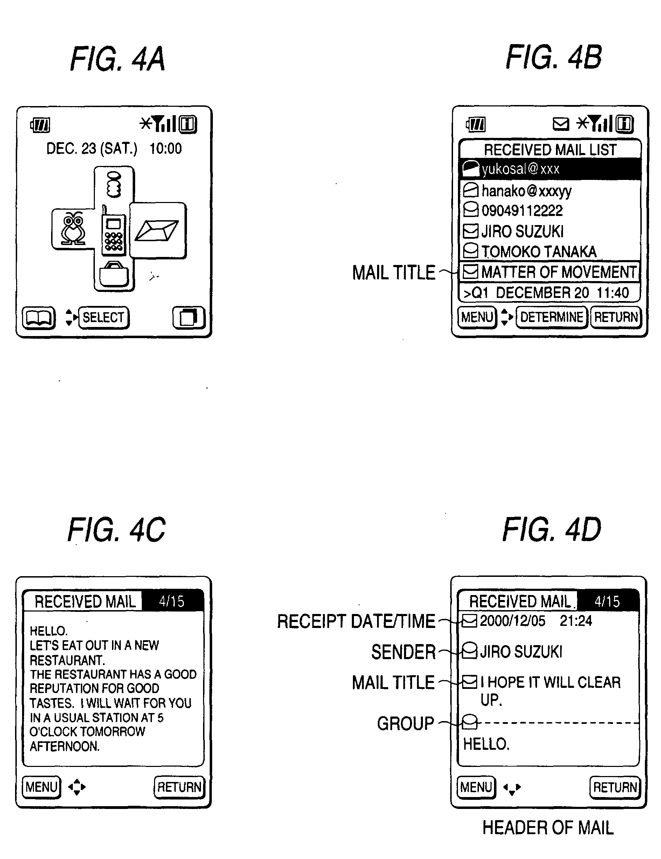

Fig. 4 shows an example of a transition of a display screen of the portable telephone for explaining the embodiment of the invention. More specifically, Fig. 4 shows an example of a mail processing. As shown in Fig. 4A, an icon selected on a displayed icon screen, that is, "mail" is enlarged and displayed. In this state, a mail processing operation is started through the manipulation of a determination key of the navigation key 14, and a mail handling screen is displayed.

When the mail handling screen is displayed and "received mail list" is selected, the "received mail list" is displayed as shown in Fig. 4B. In the "received mail list" display, a list of the received mail is displayed irrespective of unsealing or sealing of the mail. In the received mail list display, a mail address, a telephone number and a name are displayed on the screen, and a title or a part of the title for the received mail which is highlighted is displayed together.

More specifically, in Fig. 4B, a title is displayed in a title part of the received mail which is highlighted, and a received mail number and a date of receipt are displayed together. If the title is long, a part of the title is displayed. Furthermore, an illustration representing the unsealing or sealing of the received mail (that is, a picture of the unsealing or sealing of an envelope) is displayed on the left side of a portion where the received mail list is displayed.

Moreover, in the case in which a telephone number of a mail sender is coincident with a telephone number registered on a telephone book and a name is further registered on the telephone book, the name is displayed with priority.

If the user sees the received mail list shown in Fig. 4B and selects a fourth sealed mail from the top, a first screen shown in Fig. 4C is obtained and only a mail text is displayed over the whole screen. In order to display a next screen or previous screen for the mail, a scroll function is utilized. In this case, if a current scroll mode is set to be a line scroll mode, scrolling is carried out for each line. Moreover, in the case in which the line scroll is to be changed into a page scroll, the page scroll mode can be obtained by pushing the warp key (browser function key) 8.

Moreover, if the current scroll mode is set to be the page scroll, the scrolling is carried out for each page. Furthermore, in the case in which the page scroll is to be changed into the line scroll, the line scroll mode can be obtained by pushing the warp key (browser function key) 8.

Fig. 4D shows an example in which the previous screen is displayed for Fig. 4C. The received mail is constituted by an array of a date of receipt, a sender, a title of the mail and a mail text in order. The mail text is displayed on a line having a boundary provided through an unsealing mark and a broken line and therebelow.

In order to display only the mail text on a first screen in Fig. 4C, a boundary between a header portion and a mail text is clearly distinguished through a broken line as is apparent from the array of the received mail. Therefore, it is possible to easily display only the mail text by editing and displaying the broken line and a portion provided therebelow through mail reading software, for example.

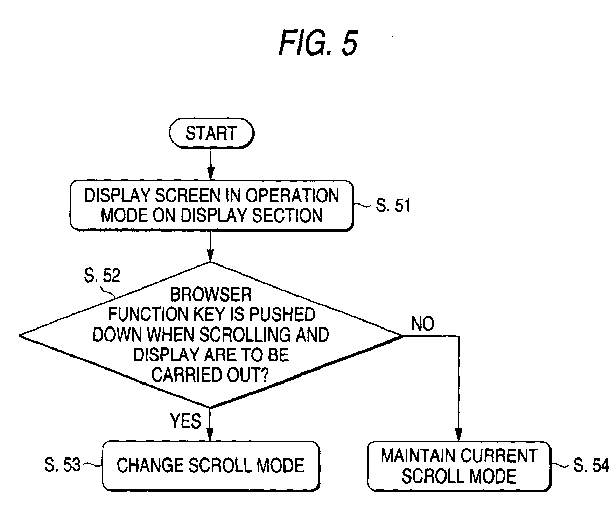

Fig. 5 is a flow chart for explaining a scroll changing operation. In Fig. 5, a screen in an operation mode is displayed on the display section 4 (Step 51). Next, when a portion which is not displayed on a current screen is to be displayed through scrolling, it is decided whether the warp key (browser function key) 8 is pushed down or not (Step 52). If the warp key (browser function key) 8 is pushed down, the scroll mode is changed (Step 53). If the warp key (browser function key) 8 is not pushed down, the current scroll mode is maintained (Step 54).

As described above, according to the first aspect of the invention, there is provided a scroll mode changing method in a portable telephone capable of carrying out non-voice information communication, wherein when a screen in an operation mode is displayed on a display section of the portable telephone and the screen is to be scrolled to display a scroll screen, a current scroll mode can be changed through a user's scroll mode changing operation. By such a structure, it is possible to obtain an advantage that the user can properly change the scroll mode.

According to the second aspect of the invention, there is provided the scroll mode changing method in a portable telephone according to the first aspect of the invention, wherein the scroll mode changing operation can be carried out through an operation of a browser function key. By such a structure, it is possible to obtain an advantage that the user can properly change the scroll mode through a simple key operation.

According to the third aspect of the invention, there is provided the scroll mode changing method in a portable telephone according to the first or second aspect of the invention, wherein the scroll mode includes a line scroll mode and a page scroll. By such a structure, it is possible to obtain an advantage that a scroll mode can be properly changed between a line unit and a page unit.

According to the fourth aspect of the invention, there is provided a portable telephone capable of changing a scroll mode by using the scroll mode changing method according to the first or second aspect of the invention. By such a structure, it is possible to obtain an advantage that a portable telephone capable of properly changing a scroll mode can be provided.

## Claims

1. A changing scroll mode method for a portable telephone capable of carrying out non-voice information communication, comprising the steps of:
displaying a screen on a display section of the portable telephone in a first scroll mode; and
changing the first scroll mode into a second scroll mode through a user's scroll mode changing operation.

2. The changing scroll mode method according to claim 1, wherein the changing scroll mode operation is an operation of a browser function key.

3. The changing scroll mode method in a portable telephone according to claim 1, wherein the first and second scroll modes include a line scroll mode and a page scroll.

4. The changing scroll mode method in a portable telephone according to claim 2, wherein the first and second scroll modes include a line scroll mode and a page scroll.

5. A portable telephone capable of carrying out non-voice information communication, comprising:
a display section for displaying a screen image; and
a browser function key to change a scroll mode through a user's operation.

6. A portable telephone according to claim 5, wherein the scroll modes include a line scroll mode and a page scroll.
